# EUROPEAN PATENT SPECIFICATION

(11) **EP 3 318 752 B1**
(45) Date of publication and mention of the grant of the patent: **08.05.2019**
(21) Application number: 17160583.5
(22) Date of filing: 13.03.2017
(51) Int. Cl.: F03D 9/28, F03D 15/00, F04B 1/053, F04B 17/02, F03D 80/80

(54) **RENEWABLE-ENERGY TYPE POWER GENERATING APPARATUS**
VORRICHTUNG ZUR STROMERZEUGUNG AUS ERNEUERBARER ENERGIE
APPAREIL DE GÉNÉRATION DE PUISSANCE DE TYPE À ÉNERGIE RENOUVELABLE

(30) Priority: 04.11.2016 JP 2016216137
(43) Date of publication of application: 09.05.2018
(73) Proprietor: Mitsubishi Heavy Industries, Ltd., Tokyo 108-8215 (JP)
(72) Inventor: KAWABATA, Shinji, Tokyo, 108-8215 (JP); NOGUCHI, Toshihide, Tokyo, 108-8215 (JP)
(74) Representative: Henkel, Breuer & Partner

(56) References cited:
- EP-A1- 2 530 310
- US-A1- 2012 313 377
- US-A1- 2013 076 042

## Description

### TECHNICAL FIELD

The present invention relates to a renewable-energy type power generating apparatus. A renewable-energy type power generating apparatus is a power generating apparatus utilizing renewable energy such as wind, tidal current, ocean current, and river current. For instance, it may be a wind turbine power generating apparatus, a tidal current power generating apparatus, an ocean current power generating apparatus, or a river current power generating apparatus.

### BACKGROUND ART

In recent years, from the perspective of preserving the global environment, renewable-energy type power generating apparatuses such as a wind turbine power generating apparatus utilizing wind power and power generating apparatuses utilizing energy of tidal current, river current, or ocean current have become widely used. A renewable-energy type power generating apparatus converts kinetic energy of wind, tidal current, ocean current, or river current into rotational energy of a rotor, and further converts this rotational energy into electric power with a generator.

A known example of such a renewable-energy type power generating apparatus is equipped with a hydraulic transmission combining a hydraulic pump driven by rotation of a rotor and a hydraulic motor connected to a generator. For example, Patent Document 1 discloses a configuration of a wind turbine power generating apparatus equipped with a hydraulic transmission, including a hydraulic motor and a generator disposed in a nacelle.

Furthermore, Patent Documents 2 and 3 disclose a configuration in which a hydraulic motor and a generator are disposed in a bottom section of a tower. In Patent Document 3, working oil is transferred through dual tubes between a hydraulic pump disposed inside a nacelle and a hydraulic motor disposed in a lower section of a tower. Patent Document 4 discloses a configuration in which at least one of a hydraulic motor or a generator is disposed in a space other than the space between a main shaft with a hydraulic pump mounted to the main shaft and a rear-side inner wall surface of a nacelle inner wall surface further from rotor blades. Patent Document 5 further discloses a configuration in which a hydraulic motor is supported integrally on a hydraulic pump.

Such a renewable-energy type power generating apparatus tends to increase in size in order to improve power generation efficiency, so that the diameter of the main shaft and the size of the hydraulic pump also increase, and a large torque is transmitted from the main shaft to the hydraulic pump. On the other hand, an increase in the size and weight of a nacelle itself should be suppressed to save production costs, for instance, and it is also desirable to suppress size increase, or to reduce the size, of the nacelle in the axial direction of the main shaft.

Furthermore, to reduce pressure loss due to friction drag (viscosity drag) and to cut weight and costs, for instance, it is desirable to have a hydraulic system (hydraulic line) of a minimum possible length.

Furthermore, a nacelle supported yaw-rotatably to a tower at an upper section of the tower should have the gravity center of structures inside the nacelle in the vicinity of the center axis of yaw rotation, that is, the rotational center axis of a yaw-rotation bearing. In particular, a hydraulic pump which increases at least in weight in accordance with size increase should be disposed on the center axis of yaw rotation inside the nacelle.

### Citation List

### Patent Literature

Patent Document 1: WO 2012/073277A
Patent Document 2: WO 2009/064192A
Patent Document 3: WO 2012/137311A
Patent Document 4: JP 5358020B
Patent Document 5: JP 5502190B

### SUMMARY

However, with the configurations of renewable-energy type power generating apparatuses disclosed in Patent Documents 1 and 5, the hydraulic motor and the generator are disposed inside the nacelle, and thus the size of the nacelle and the weight inside the nacelle space cannot be reduced sufficiently. Furthermore, with the configurations disclosed in Patent Documents 2 and 3, the hydraulic line is long, which requires a large amount of working oil, a great length of piping, and thus more costs, and which may lead to a failure to reduce friction loss. Still further, with the configuration of Patent Document 4, although the nacelle is reduced in size and the hydraulic line is shortened by positioning the hydraulic motor and the generator in a space other than the rear space inside the nacelle, the hydraulic motor is disposed on a floor portion that divides the tower into an upper section and a lower section, which may not necessarily lead to a decrease in the length of the hydraulic line.

In addition, none of the renewable-energy power generating apparatuses disclosed in Patent Documents 1 to 5 has a hydraulic pump disposed on the rotational center axis of the yaw-rotation bearing, which makes the arrangement not necessarily ideal in the context of a further size increase of a renewable-energy type power generating apparatus.

EP 2530310A1 discloses a renewable-energy type power generating apparatus on which the preamble portion of claim 1 is based.

In view of the above, an object of at least one embodiment of the present invention is to provide a renewable-energy type power generating apparatus whereby it is possible to both shorten the length of the hydraulic line and reduce the weight inside the nacelle space.
(1) A renewable-energy type power generating apparatus for generating electric power from renewable energy, according to the present invention, comprises the features of claim 1 including: a tower; a nacelle disposed on an upper end portion of the tower yaw-rotatably via a yaw rotation bearing; a main shaft housed in the nacelle and configured to rotate with a rotor; a hydraulic pump housed in the nacelle and disposed to extend from front to rear across a center axis of the yaw rotation bearing in a direction of a rotational axis of the main shaft; a hydraulic motor to be driven by working oil supplied from the hydraulic pump; and a hydraulic system for circulating the working oil between the hydraulic pump and the hydraulic motor. The hydraulic motor is disposed below the hydraulic pump and in an upper space inside the tower so that at least a part of the hydraulic motor overlaps with the hydraulic pump in a top view.
   With this configuration, the hydraulic pump is disposed from front to rear across the center axis of the yaw rotation bearing in the direction of the rotational axis of the main shaft inside the nacelle. Further, the hydraulic motor is disposed in an upper space inside the tower and below the hydraulic pump so that at least a part of the hydraulic motor overlaps with the hydraulic pump in a top view. In other words, the hydraulic pump is disposed on the center axis of the yaw rotation bearing, and the hydraulic motor is disposed in the upper space inside the tower and below the hydraulic pump. Accordingly, at least the hydraulic motor is not disposed behind the main shaft or the hydraulic pump inside the nacelle, which makes it possible to reduce the weight inside the nacelle space. Further, it is possible to position the hydraulic motor directly below the hydraulic pump, in case of which it is possible to minimize the length of the hydraulic line, thus reducing costs related to piping, maintenance, and the like considerably.
   In the above (1), the upper space inside the tower is preferably the upper most space if the inside of the tower is divided into a plurality of spaces in the upward and downward direction. Preferably, the upper space is the space closer to the nacelle, inside the tower, and the upper most section inside the tower and directly below the hydraulic pump disposed inside the nacelle.
(2) In the invention, in the renewable-energy type power generating apparatus described in the above (1), the hydraulic pump and the hydraulic motor are both supported to a nacelle side so that a relative displacement in a yaw-rotational direction does not occur between the hydraulic pump and the hydraulic motor.
   With this configuration, the same effect as that of the renewable-energy type power generating apparatus described in the above (1) can be achieved, and in addition, the relative position of the hydraulic pump and the hydraulic motor does not change in the yaw rotational direction. Thus, the hydraulic line does not twist due to yaw rotation during operation, at least between the hydraulic pump and the hydraulic motor.
(3) In some embodiments, in the renewable-energy type power generating apparatus described in the above (1) or (2), the nacelle includes a nacelle base plate disposed on a lower part of the nacelle and configured to support the hydraulic pump, and the hydraulic motor is disposed directly below the nacelle base plate.
   With this configuration, the same effect as that of the renewable-energy type power generating apparatus described in the above (1) or (2) can be achieved, and in addition, since the hydraulic motor is positioned directly below the hydraulic pump, it is possible to shorten the length of the hydraulic line extremely, thus reducing costs related to piping, maintenance, and the like.
(4) In some embodiments, in the renewable-energy type power generating apparatus described in the above (1) to (3), the hydraulic pump and the hydraulic motor are supported on the nacelle base plate, and the hydraulic pump, the hydraulic motor, and a high-pressure oil line of the hydraulic system are configured to yaw-rotate with the nacelle base plate.
   With this configuration, the same effect as that of the renewable-energy type power generating apparatus described in any one of the above (1) to (3) can be achieved, and in addition, the hydraulic pump, the hydraulic motor, and the high-pressure oil line for carrying high-pressure oil between the hydraulic pump and the hydraulic motor are all supported to the nacelle side via the nacelle base plate. Thus, the high-pressure side members of the hydraulic system rotate integrally upon yaw rotation, which reduces the risk of oil leakage and the like due to twist and torsion.
(5) In some embodiments, in the renewable-energy type power generating apparatus described in the above (4), the hydraulic pump includes a cylinder block including a plurality of cylinders for respectively guiding a plurality of pistons slidably along a radial direction of the main shaft, and the high-pressure oil line merges at the rear end portion of the hydraulic pump with respect to the direction of the rotational axis, and at least a part of the high-pressure oil line on a downstream side is guided into the cylinder block.
   With this configuration, the same effect as that of the renewable-energy type power generating apparatus described in the above (4) can be achieved, and in addition, at least a part of the high-pressure oil line merged at the rear end portion of the hydraulic pump in the direction of the rotational axis is guided into the cylinder block at a further downstream position. That is, it is possible to guide high-pressure oil collected behind the hydraulic pump to the front side in the direction of the rotational axis, which makes it no longer necessary to provide members constituting the high-pressure oil line behind the hydraulic pump. Thus, it is possible to reduce the size of the nacelle in the direction of the rotational axis, and to further reduce the weight of the nacelle.
(6) In some embodiments, in the renewable-energy type power generating apparatus described in the above (5), the high-pressure oil line directly connects to a lower portion of the cylinder block.
   With this configuration, the same effect as that of the renewable-energy type power generating apparatus described in the above (5) can be achieved, and in addition, the high-pressure oil line directly connects to a lower portion of the cylinder block, which makes it possible to further reduce the length of the high-pressure oil line disposed between the hydraulic pump and the hydraulic motor disposed below the hydraulic pump and in the upper space inside the tower so as to overlap with the hydraulic pump in a top view.
(7) In some embodiments, in the renewable-energy type power generating apparatus described in the above (2) to (6), the nacelle side comprises a bearing upper portion of the yaw rotation bearing, the bearing upper portion being connected to the nacelle, and a member supported to the bearing upper portion.
   With this configuration, the same effect as that of the renewable-energy type power generating apparatus described in any one of the above (2) to (6) can be achieved, and in addition, the hydraulic pump and the hydraulic pump can be supported on the bearing upper portion of the yaw rotation bearing. Accordingly, the flexibility of position and layout improves even further.
(8) In some embodiments, in the renewable-energy type power generating apparatus described in the above (1) to (7), the hydraulic motor is disposed so that an output shaft of the hydraulic motor is disposed along a vertical direction.
   With this configuration, the same effect as that of the renewable-energy type power generating apparatus described in the above (1) to (7) can be achieved, and in addition, the hydraulic motor is disposed below the hydraulic pump so that the output shaft is vertical, and thus can be positioned so that the center axis of yaw rotation and the output shaft of the hydraulic motor are substantially parallel in the upper space inside the tower.
(9) In some embodiments, the renewable-energy type power generating apparatus described in the above (1) to (8) further comprises an oil storage plate and a tank communicating with the oil storage plate disposed inside the tower and below the hydraulic motor.
   With this configuration, the same effect as that of the renewable-energy type power generating apparatus described in the above (1) to (8) can be achieved, and in addition, the oil storage plate and the tank disposed below the hydraulic motor can store and recover oil leaking from the hydraulic motor disposed in the upper space inside the tower.
(10) In some embodiments, the renewable-energy type power generating apparatus described in the above (1) to (9) further comprises a seal for preventing oil leakage from the hydraulic system to outside, an oil storage of oil which leaks from the seal, and a tank communicating with the oil storage. The tower accommodates the seal, the oil storage, and the tank.
   With this configuration, the same effect as that of the renewable-energy type power generating apparatus described in the above (1) to (9) can be achieved, and in addition, it is possible to prevent oil leakage from the hydraulic system with the seal, to store oil that the seal fails to block in the oil storage, and to recover the stored oil with the tank.
(11) In some embodiments, in the renewable-energy type power generating apparatus described in the above (1) to (10), the hydraulic system comprises an anti-pulsation accumulator for preventing pulsation of the hydraulic pump and/or the hydraulic motor.
   With this configuration, the same effect as that of the renewable-energy type power generating apparatus described in the above (1) to (9) can be achieved, and in addition, with the anti-pulsation accumulators, it is possible to prevent pulsation caused by pumping of the hydraulic pump.
(12) In some embodiments, the renewable-energy type power generating apparatus described in the above (1) to (11) comprises a wind turbine power generating apparatus, and is configured such that the main shaft rotates as the rotor receives wind.
   With this configuration, it is possible to provide a wind turbine power generating apparatus having the same effect as that of the renewable-energy type power generating apparatus described in any one of the above (1) to (11).
(13) In some embodiments, in the renewable-energy type power generating apparatus described in the above (1) to (12), the hydraulic motor is coupled to a generator via a flexible coupling so as to be capable of transmitting power to the generator.
   With this configuration, the same effect as that of the renewable-energy type power generating apparatus described in any one of the above (1) to (12) can be achieved, and in addition, since power is transmitted between the hydraulic motor and the generator via the flexible coupling, it is possible to permit misalignment in the relative position therebetween. Thus, it is possible to prevent damage due to swaying and oscillation, and thus to improve apparatus reliability.

According to at least one embodiment of the present invention, it is possible to provide a renewable-energy type power generating apparatus whereby it is possible to both shorten the length of a hydraulic line and to reduce the weight of a nacelle.

### BRIEF DESCRIPTION OF DRAWINGS

FIG. 1 is an illustrative schematic diagram of a wind turbine power generating apparatus according to some embodiments.
FIG. 2 is a schematic vertical cross-sectional view of a hydraulic pump according to some embodiments, taken along the axial direction.
FIG. 3 is an enlarged schematic partial diagram showing a transverse cross section of the hydraulic pump in FIG. 2, taken along a direction orthogonal to the axial direction.
FIG. 4 is a schematic configuration diagram of a wind turbine power generating apparatus according some embodiments.
FIG. 5 is a cross-sectional view of FIG. 4, as seen in the direction of arrows V.
FIG. 6 is a schematic diagram of a wind turbine power generating apparatus according to another embodiment.
FIG. 7A is a top view illustrating an arrangement of a hydraulic motor in a wind turbine power generating apparatus according to some embodiments, where one hydraulic motor is disposed along the center axis of yaw rotation.
FIG. 7B is a top view illustrating an arrangement of a hydraulic motor in a wind turbine power generating apparatus according to some embodiments, where two hydraulic motors are disposed symmetrically with respect to the axis.
FIG. 7C is a top view illustrating an arrangement of a hydraulic motor in a wind turbine power generating apparatus according to some embodiments, where three hydraulic motors are disposed symmetric with respect to the axis.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention unless particularly specified.

In the following embodiment, a wind turbine power generating apparatus will be described as an example of a renewable-energy type power generating apparatus. However, the present invention can be applied to other renewable-energy type power generating apparatuses such as a tidal current power generating apparatus, an ocean current power generating apparatus, and a river current power generating apparatus.

### (First embodiment)

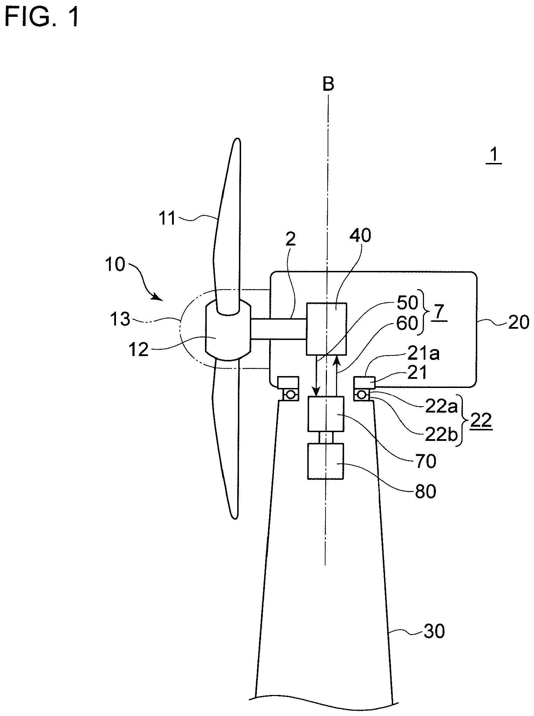

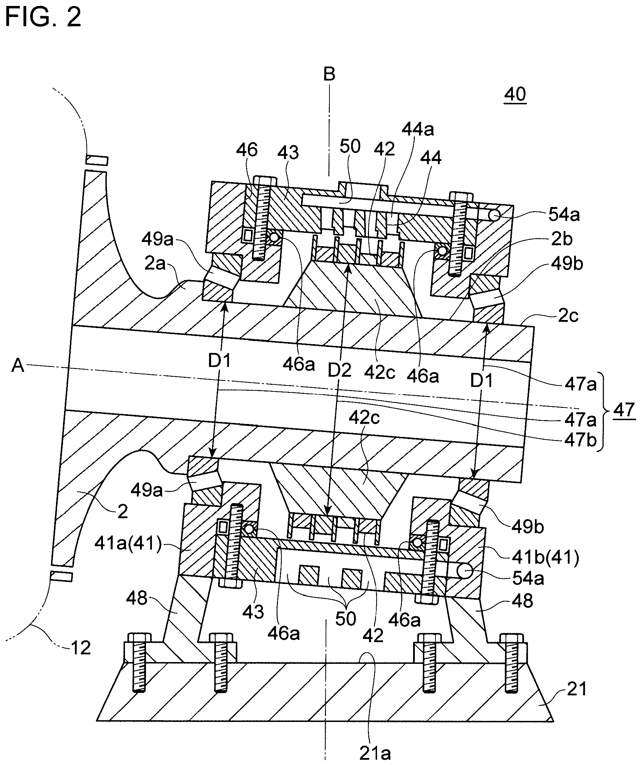

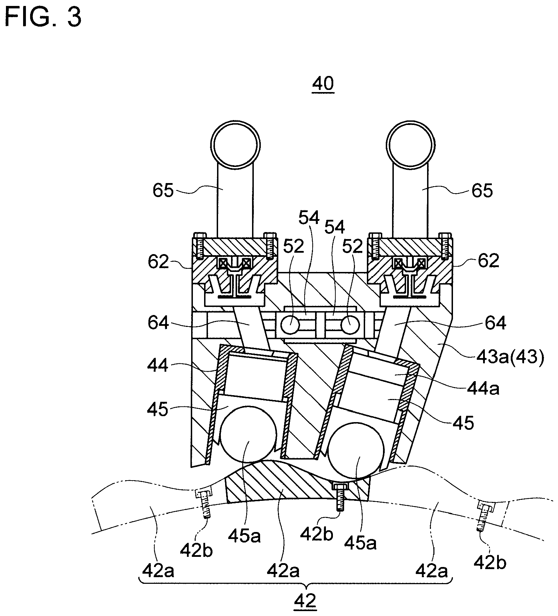

FIG. 1 is an illustrative schematic diagram of a wind turbine power generating apparatus according to some embodiments. FIG. 2 is a schematic vertical cross-sectional view of a hydraulic pump according to some embodiments, taken along the axial direction. FIG. 3 is an enlarged schematic partial diagram showing a transverse cross section of the hydraulic pump in FIG. 2, taken along a direction orthogonal to the axial direction.

As depicted in FIG. 1, a wind turbine power generating apparatus 1 includes a tower 30, a nacelle 20 disposed yaw-rotatably to an upper end portion of the tower 30 via a yaw rotation bearing 22, a main shaft 2 that is housed in the nacelle 20 and that rotates along with a rotor 10, a hydraulic pump 40 housed in the nacelle 20 and disposed from front to rear across the center axis B of the yaw rotation bearing 22 in the rotational-axis direction A of the main shaft 2, a hydraulic motor 70 driven by working oil supplied from the hydraulic pump 40, and a hydraulic system 7 for circulating working oil between the hydraulic pump 40 and the hydraulic motor 70. As the wind turbine power generating apparatus 1 receives wind at the rotor 10, the main shaft 2 rotates.

Further, as depicted in FIGs. 1 and 2, the wind turbine power generating apparatus 1 includes a rotor 10 (wind turbine rotor) including at least one blade 11 and a hub 12, a main shaft 2 coupled to the rotor 10, the hydraulic pump 40 including a stator part 41 and a pump shaft 42c serving as a rotor part disposed rotatably relative to the stator part 41 and configured to rotate along with the main shaft 2, the nacelle 20 housing at least the hydraulic pump 40, a tower 30 supporting the nacelle 20, the yaw rotation bearing 22 rotatably supporting a nacelle base plate 21 of the nacelle 20 to the tower 30, a support part 48 supporting the stator part 41 to the nacelle base plate 21, and a pair of bearings 49a, 49b disposed between the stator part 41 and the main shaft 2 or the rotor part, supporting the main shaft 2 rotatably to the nacelle base plate 21 via the stator part 41 and the support part 48.

At least a part of the main shaft 2 is covered with the nacelle 20 disposed on the tower 30. The hub 12 may be covered with a hub cover 13. Further, in some embodiments, the nacelle base plate 21 is disposed on a lower part of the nacelle 20 and configured to support the hydraulic pump 40.

In some embodiments, the main shaft 2 is coupled to the rotor 10, and the hydraulic pump 40 is also coupled to the rotor 10 via the main shaft 2. The hydraulic motor 70 is connected to the hydraulic pump 40 via a high-pressure oil line 50 and a low-pressure oil line 60. Specifically, an outlet of the hydraulic pump 40 is connected to an inlet of the hydraulic motor 70 via the high-pressure oil line 50, and an inlet of the hydraulic pump 40 is connected to an outlet of the hydraulic motor 70 via the low-pressure oil line 60.

The hydraulic pump 40 is driven by the main shaft 2 to pressurize the working oil, thereby producing high-pressure working oil (pressurized oil). The pressurized oil produced by the hydraulic pump 40 is supplied to the hydraulic motor 70 via the high-pressure oil line 50, and drives the hydraulic motor 70. The low-pressure working oil having performed work in the hydraulic motor 70 is returned again to the hydraulic pump 40 via the low-pressure oil line 60 disposed between the outlet of the hydraulic motor 70 and the inlet of the hydraulic pump 40. Accordingly, the hydraulic system 7 circulates working oil between the hydraulic pump 40 and the hydraulic motor 70.

The hydraulic motor 70 is disposed in an upper space 31 inside the tower 30 and below the hydraulic pump 40 so that at least a part of the hydraulic motor 70 overlaps with the hydraulic pump 40 in a top view. In some embodiments, the hydraulic motor 70 is disposed directly below the nacelle base plate 21.

Preferably, the upper space 31 is a space closer to the nacelle 20, inside the tower 30. For instance, if the tower 30 is divided inside in an upward and downward direction (or vertical direction) into a plurality of spaces by a partition or the like, the upper space 31 is preferably at least the uppermost space thereof.

In some embodiments, the hydraulic pump 40 and the hydraulic motor 70 are both supported to a nacelle 20 side so as not to cause a relative displacement in the yaw-rotational direction between the hydraulic pump 40 and the hydraulic motor 70. In some embodiments, the hydraulic pump 40 and the hydraulic motor 70 may be coupled rigidly so as not to cause a change in the relative position with respect to each other.

In some embodiments, the nacelle 20 side may include a bearing upper portion 22a of the yaw rotation bearing 22, connected to the nacelle 20, and various components supported on the bearing upper portion 22a. In some embodiments, the hydraulic motor 70 may be disposed so that an output shaft 71 of the hydraulic motor 70 is along the vertical direction. However, the direction of the output shaft 71 is not limited to the vertical direction, and may be the horizontal direction or an inclined direction, for instance.

The generator 80 is coupled to the hydraulic motor 70. In some embodiments, the generator 80 is a synchronous generator connected to a utility grid and driven by the hydraulic motor 70. In some embodiments, at least the hydraulic pump 40 is housed inside the nacelle 20, and the hydraulic motor 70 and the generator 80 are disposed inside the upper space 31 inside the tower 30. In some embodiments, the hydraulic pump 40 and the hydraulic motor 70 are supported to the nacelle base plate 21, and the hydraulic pump 40, the hydraulic motor 70, and the high-pressure oil line 50 of the hydraulic system 7 yaw-rotate with the nacelle base plate 21. In some embodiments, the hydraulic motor 70 may be disposed on the center axis B of the yaw rotation bearing 22 that rotatably supports the nacelle 20 on the tower 30.

In some embodiments, at least one of the above described hydraulic pump 40 or the hydraulic motor 70 is a radial-piston type hydraulic machine described below.

In the embodiment depicted in FIG. 2, the hydraulic pump 40 includes the stator part 41, the pump shaft 42c being a rotor part disposed rotatably relative to the stator part 41 and configured to rotate with the main shaft 2, a plurality of pistons 45 disposed along the radial direction of the pump shaft 42c, a cylinder block 43 including a plurality of cylinders 44 for holding and guiding the respective pistons 45 slidably along the radial direction of the main shaft 2 or the hydraulic pump 40, a first end plate and a second end plate supporting the cylinder block 43 to the support part 48 and disposed in front and rear with respect to the axial direction across the cylinder block 43, and a pair of front and rear bearings 46a for rotatably supporting the cylinder block 43 to the first end plate and the second end plate.

In an illustrative embodiment, the hydraulic pump 40 includes the bearings 49a, 49b rotatably supporting the main shaft 2 about the axis in front and rear of the main shaft 2 in the axial direction, and a seal that seals clearance between the main shaft 2 and each of the front and rear end plates. That is, the main shaft 2 is supported inside the nacelle 20 via the pair of bearings 49a, 49b disposed in front and rear in the axial direction, the hydraulic pump 40 having the bearings 49a, 49b, and a support mechanism (e.g. the support part 48) of the hydraulic pump 40. The front main bearing 49a may be engaged with a flange portion 2a disposed slightly rearward from the front end of the main shaft 2. The rear main bearing 49b may be mounted in the vicinity of the rear end portion of the main shaft 2.

In the present embodiment, the pump shaft 42c is mounted around the main shaft 2, that is, to the outer peripheral surface 2b of the main shaft 2, so as to be integrally rotatable with the main shaft 2. The main shaft 2 and the pump shaft 42c are coupled in a way that is not particularly limited as long as torques can be transmitted reliably, such as shrink fit and spline coupling.

The stator part 41 of the hydraulic pump 40 is disposed outside the rotor part 47 in the radial direction.

As depicted in FIG. 2, the support part 48 is disposed on the upper portion 21a of the nacelle base plate 21, and to support at least one of the front end portion 41a or the rear end portion 41b of the stator part 41 in the axial direction. In other words, the support part 48 is configured to support the stator part 41 at the front end portion 41a, at the rear end portion 41b, or at both of the front end portion 41a and the rear end portion 41b, in the axial direction.

A plurality of pistons 45 is arranged in a radial fashion on the outer side, in the radial direction, of a ring cam 42. A roller 45a to be in contact with a cam surface of the ring cam 42 is mounted to an end portion of each piston 45. The piston 45 is configured to be capable of reciprocating along the radial direction of the hydraulic pump 40, being guided by the cylinder 44. When each piston 45 reciprocates in the corresponding cylinder 44, the volume of a working chamber 44a formed by the piston 45 and the cylinder 44 changes cyclically. The mode of motion is converted between such reciprocating motion of the pistons 45 accompanied by the cyclic volume change of the working chambers 44a and the rotational motion of the hydraulic pump 40. Specifically, rotational motion of the ring cam 42 rotating with the pump shaft 42c is converted into reciprocating motion of the pistons 45, so that the cyclic volume change of the working chambers 44a takes place and high-pressure working oil (pressurized oil) is produced in the working chambers 44a.

The ring cam 42 is fixed to the outer periphery of the pump shaft 42c. Further, the ring cam 42 has a cam surface formed in a continuous wavy shape along the circumferential direction of the pump shaft 42c, and is disposed in an annular shape so as to surround the entire periphery of the pump shaft 42c. A plurality of rows of ring cams 42 may be disposed in the axial direction of the pump shaft 42c (hereinafter, merely referred to as the axial direction). The ring cam 42 is not limited to one having a cam surface of a wavy shape, but may have a cam surface of an eccentric cam which has a single cam surface with the center of the ring cam 42 being offset from the center position of the shaft.

Further, the ring cam 42 is divided in the circumferential direction of the pump shaft 42c so as to be attachable and detachable in the radial direction of the hydraulic pump 40 (pump shaft 42c) (see FIG. 3). That is, the ring cam 42 includes a plurality of ring cam segments (cam segments) 42a disposed in the circumferential direction. The cam segments 42a are coupled to the pump shaft 42c by bolts 42b, and it is possible to detach the cam segments 42a from the pump shaft 42c, and to take the cam segments 42a outside a casing including the first and second end plates (the front end portion 41a and the rear end portion 41b of the stator part 41) by removing the bolts 42b. The ring cam 42 including the plurality of ring cam segments 42a may be directly mounted to the outer periphery of the main shaft 2 between the pair of bearings 49a, 49b in the axial direction. The ring cam 42 is mounted to the main shaft 2 either directly or indirectly via an additional shaft such as the pump shaft 42c.

The cylinder block 43 is disposed outside the ring cam 42 in the radial direction and arranged so as to extend in an annular shape over the entire circumference of the pump shaft 42c. Inside the cylinder block 43, formed are cylinders 44, as well as a high-pressure oil channel 54 and a low-pressure oil channel 64 communicating with the working chambers 44a in the cylinders 44. Further, the cylinder block 43 is divided in the circumferential direction of the pump shaft 42c so as to be attachable and detachable in the radial direction of the hydraulic pump 40. That is, the cylinder block 43 includes a plurality of cylinder block segments 43a disposed in the circumferential direction of the hydraulic pump 40. In this case, for each one of the cylinder block segments 43a, a plurality of sets may be arranged in the axial direction and the circumferential direction of the hydraulic pump 40, each set including a cylinder 44, a high-pressure oil channel 54, and a low-pressure oil channel 64.

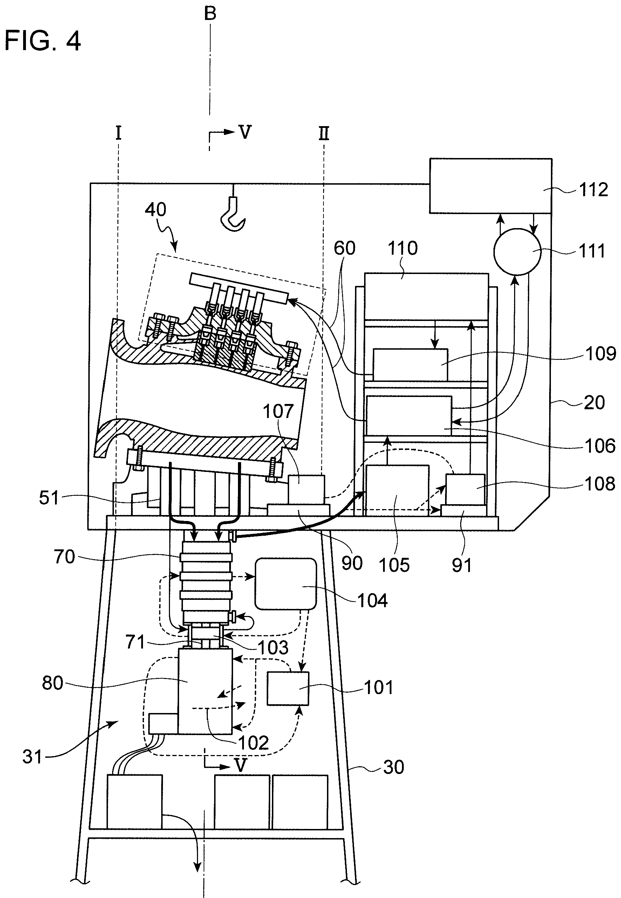

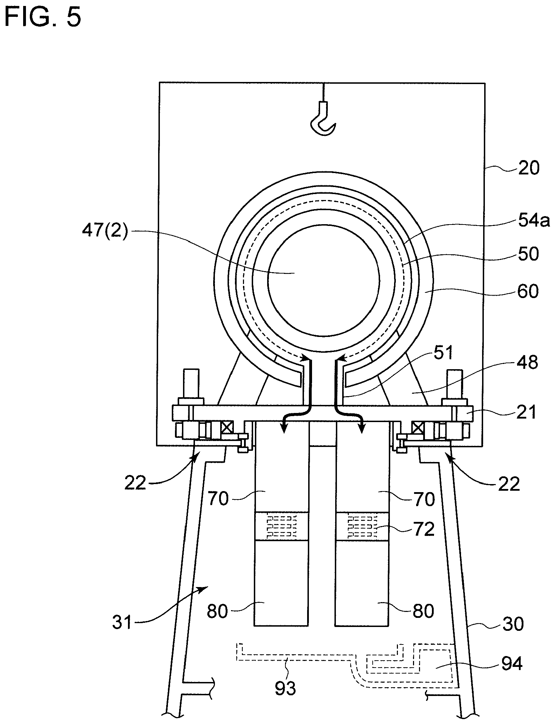

As depicted in FIG. 3, a high-pressure valve 52 is disposed in the high-pressure oil channel 54, so that the high-pressure oil channel 54 communicates with the high-pressure oil line 50 (see FIGs. 1 and 4) as the high-pressure valve 52 opens. In an illustrative embodiment, high-pressure oil lines 50 merge into a high-pressure manifold (collecting pipe) 54a at the rear side of the hydraulic pump 40 in the direction of the rotation axis. In some embodiments, at least a further downstream part of the high-pressure manifold 54a may be guided into the cylinder block 43. Specifically, high-pressure oil collected in the high-pressure manifold 54a from the plurality of high-pressure oil channels 54 may be transferred again to the high-pressure oil lines 50 through the cylinder block 43 (see FIGs. 2 and 5). A low-pressure valve 62 is disposed in the low-pressure oil channel 64, so that the low-pressure oil channel 64 communicates with a low-pressure oil pipe 65 (branch pipe) as the low-pressure valve 62 opens.

Further, in an embodiment, as depicted in FIG. 3, the length of a cylinder block segment 43a in the circumferential direction is longer than the length of a cam segment 42a in the circumferential direction covered with the cylinder block segment 43a. Accordingly, by removing at least one cylinder block segment 43a, it is possible to expose at least one cam segment 42a being covered with the at least one cylinder block segment 43a for the sake of maintenance. Further, by removing the exposed cam segment 42a, it is possible to replace and repair the cam segment 42a readily. Maintenance mentioned herein includes repairing, fixing, replacing, and checking. It will be understood that the removed cylinder block 43 itself can also undergo maintenance.

In some embodiments, a pair of bearings 49a, 49b is disposed in front and rear across the center axis B of the yaw rotation bearing 22 in the axial direction of the main shaft 2, while the hydraulic pump 40 is disposed from front to rear across the center axis B of the yaw rotation bearing 22 in the axial direction.

The stator part 41 includes bearing-fixing parts 46, 46 to which a pair of bearings 49a, 49b is mounted, and the cylinder block 43 is disposed to be nipped between the pair of bearing-fixing parts 46, 46 in the axial direction.

In some embodiments, the rotor part 47 includes a pair of small-diameter portions 47a, 47a having a pair of bearings 49a, 49b mounted thereto, and a large-diameter portion 47b disposed between the pair of small-diameter portions 47a, 47a in the axial direction, with the ring cam 42 mounted to the large-diameter portion 47b. The large-diameter portion 47b may have a diameter (D2) larger than the diameter (D1) of the small-diameter portions 47a (D1 < D2) (see FIG. 2).

Next, with reference to FIGs. 4 and 5, a configuration example of a wind turbine power generating apparatus according to an embodiment will be described.

FIG. 4 is a schematic diagram showing a configuration example of a wind turbine power generating apparatus according to some embodiments. FIG. 5 is a cross-sectional view of FIG. 4, as seen in the direction of arrows V-V. In FIG. 4, the dotted line I shows the front end portion of the yaw rotation bearing 22, and the dotted line II shows the rear end portion of the yaw rotation bearing 22, with respect to the front-rear direction of the center axis A of the main shaft 2 (see FIG. 2).

In an illustrative embodiment, a high-pressure pipe 51 is disposed below the hydraulic pump 40.

The high-pressure pipe 51 is disposed so as to guide high-pressure oil downward from the cylinder block segment 43a disposed lowermost in the circumferential direction of the hydraulic pump 40. In this case, the cylinder block segment 43a in the lowermost position may be exclusively provided for the high-pressure pipe 51. That is, no cylinder 44 or piston 45 may be provided for the cylinder block segment 43a disposed on the lowermost position in the circumferential direction.

One or more high-pressure pipes 51 may be provided, in accordance with the number of hydraulic motors 70 operated by high-pressure oil from the hydraulic pump 40. In an illustrative embodiment, three high pressure pipes 51 are disposed below the hydraulic pump 40. However, the configuration is not limited to this, and the high-pressure pipe 51 and the hydraulic motor 70 may be provided as many as needed.

In an illustrative embodiment, the high-pressure oil line 50 directly connects to a lower portion of the cylinder block 43. That is, the high-pressure pipe 51 is disposed directly below the cylinder block 43. In an illustrative embodiment, two hydraulic motors 70 are disposed directly below the hydraulic pump 40, and two high-pressure pipes 51 are provided to guide high-pressure oil to the two hydraulic motors 70.

In an illustrative embodiment, at least the hydraulic motor 70 is housed inside the upper space 31 inside the tower 30. It is preferable to provide the hydraulic motor 70 on the further upper section of the upper space 31 so as to minimize the length of the high-pressure oil line 50 as much as possible, and the uppermost section of the tower 30 is particularly desirable. The position of the hydraulic motor 70 is preferably directly below the hydraulic pump 40, whereby the length of the high-pressure pipe 51 can be reduced considerably, or as short as possible, as compared to a case in which the hydraulic motor 70 is disposed in a lower section of the tower 30 (bottom part inside the tower 30) or a space lower than the uppermost section of the tower 30.

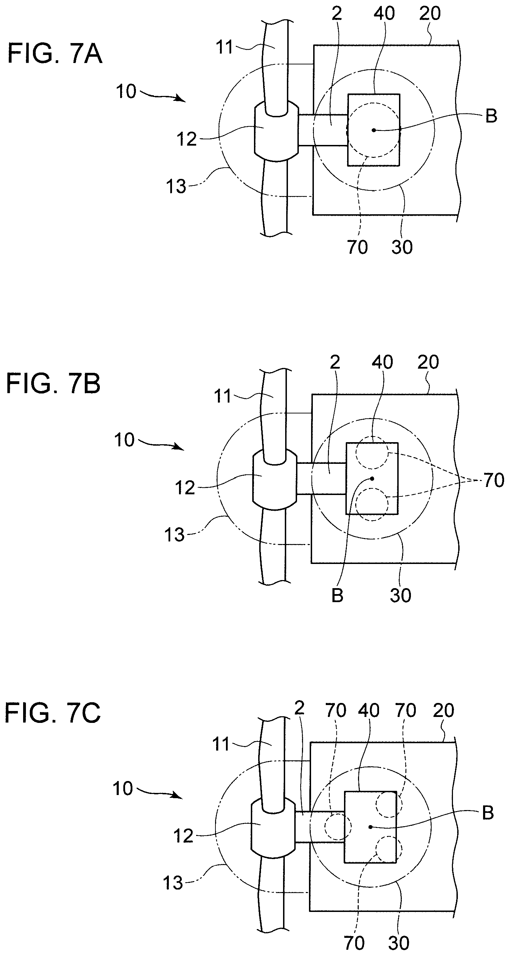

In an illustrative embodiment, the hydraulic motor 70 may be disposed erected so that the output shaft 71 is vertical. However, the position of the hydraulic motor 70 is not limited to an erected position, and may be horizontal or inclined. For instance, if only one hydraulic motor 70 is provided, it is preferable to position the center axis of the output shaft 71 close to the center axis B of yaw rotation, or the center axis of the output shaft 71 may be in the same position as the center axis B (see FIG. 7A). If a plurality of hydraulic motors 70 is provided, the output shafts 71 of the respective hydraulic motors 70 may be substantially parallel to the center axis B of yaw rotation. Further, if a plurality of hydraulic motors 70 is provided, the output shafts 71 of the respective hydraulic motor 70 may be axially symmetric with respect to the center axis B of yaw rotation (see FIGs. 7B and 7C). However, the position of each hydraulic motor 70 is not limited to this.

The number of hydraulic motor 70 may be set as needed in accordance with the planned rated output, operation time (year), operational condition, maintenance period, or the like of the wind turbine power generating apparatus 1. For instance, one large hydraulic motor of about 15MW may be provided (see FIG. 7A). Further, for instance, three hydraulic motors of about 5MW may be provided symmetrically with respect to the axis (see FIG. 7C). Still further, for instance, one hydraulic motor 70 may be disposed along the center axis B, and two, three, or more hydraulic motors may be additionally disposed around the first hydraulic motor 70 symmetrically with respect to the center axis B. The above arrangements may be flexibly implemented in various combinations in accordance with the condition of a space available inside the upper space 31 of the tower 30 for providing the hydraulic motor 70. If a plurality of hydraulic motors 70 is provided, operation can be continued with remaining normal hydraulic motors 70 even if one or more of the hydraulic motors 70 become out of working order.

In an illustrative embodiment, a generator 80 is coupled to a lower part of the hydraulic motor 70 disposed erected. In some embodiments, the hydraulic motor 70 is coupled to the generator 80 via a flexible coupling 72 so as to be capable of transmitting power (see FIG. 5).

In some embodiments, an oil storage plate 93 may be disposed below the hydraulic motor 70 inside the tower 30, and a tank 94 may be further provided in communication with the oil storage plate 93 (see FIG. 5). In some embodiments, a seal 92 may be provided inside the tower 30, to prevent oil leakage from the hydraulic system 7 to outside. In some embodiments, the oil storage plate 93 may be configured to function as an oil storage for storing oil leaking from the seal.

In some embodiments, the hydraulic system 7 may include an anti-pulsation accumulator for preventing pulsation of the hydraulic pump 40 and/or the hydraulic motor 70. The hydraulic system 7 may include a high-pressure accumulator 90 for preventing pulsation of high-pressure oil, and a low-pressure accumulator 91 for preventing pulsation of low-pressure oil, both serving as an anti-pulsation accumulator. Further, a high-pressure relief valve 107 for allowing a pressure in the high-pressure oil line 50 to escape may be provided, as well as a low-pressure relief valve 108 for allowing a pressure in the low-pressure oil line to escape.

In an illustrative embodiment, a filter 105 for filtering low-pressure and high-temperature working oil (low-pressure oil) after having performed work in the hydraulic motor 70 may be provided, as well as a radiator 106 for cooling low-pressure oil filtered by the filter 105. A part of the low-pressure oil filtered by the filter 105 may be returned to a main tank 110 having a pressure under the atmospheric pressure via a low-pressure relief valve 108, before being returned to a low-pressure oil line 60 by a boost pump 109.

In an illustrative embodiment, a coolant-water pump 111 and a cooler 112 for circulating coolant water for cooling working oil may be provided.

In an illustrative embodiment, a generator lubrication-oil pump 101 for supplying lubricant oil to the generator 80, or a generator coolant-water line 102 for cooling the generator 80 may be provided in the upper space 31 inside the tower 30. In an illustrative embodiment, an auxiliary pump 103, or an auxiliary tank 104 for replenishing working oil leaking inside the hydraulic motor 70 may be provided for the hydraulic motor 70.

### (Second embodiment)

Next, the wind turbine power generating apparatus 1 according to the second embodiment will be described, to which the present invention is applied. The wind turbine power generating apparatus 1 according to the second embodiment mainly differs from the first embodiment in that a rotary table 36 for supporting the generator 80 inside the tower 30 is provided, and is otherwise similar to the first embodiment in terms of configuration. Thus, the same component is associated with the same reference numeral and not described in detail.

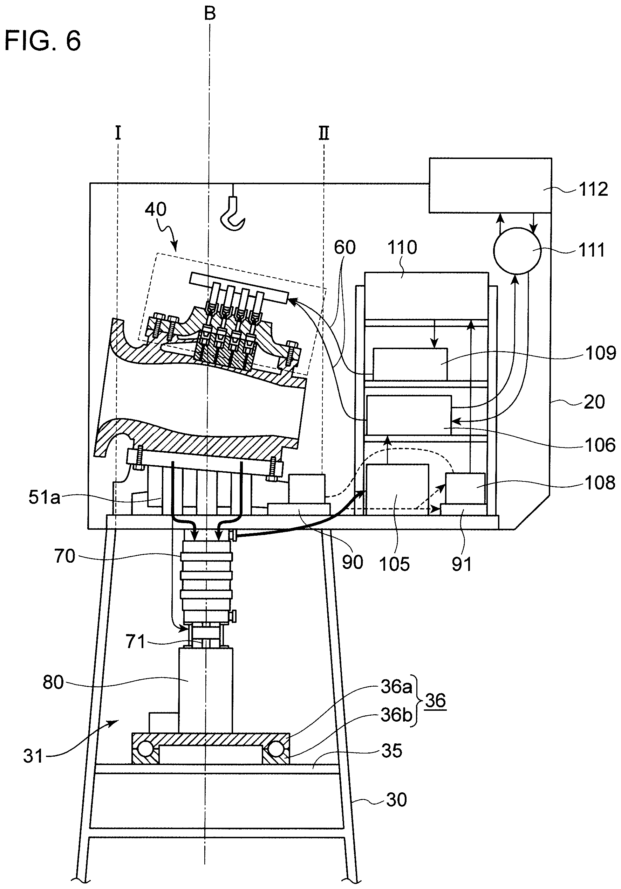

In the modified example depicted in FIG. 6, a partition plate 35 is disposed inside the upper space 31 inside the tower 30, and the rotary table 36 including a rotary surface 36a and a support part 36b is disposed on the partition plate 35. The generator 80 is disposed on the rotary table 36. That is, the loads of the hydraulic motor 70 suspended directly below the hydraulic pump 40 and of the generator 80 coupled to the lower part of the hydraulic motor 70 are supported by the tower 30 via the rotary table 36 and the partition plate 35. Preferably, the rotational center axis of the rotary table coincides with the center axis B of yaw rotation.

The position of the partition plate 35 and the rotary table 36 in the height direction, that is, the position of the partition plate 35 and the rotary table 36 in the direction of the center axis B of the yaw rotation bearing 22, may be set taking account of the size of the hydraulic pump 40, the hydraulic motor 70, or the generator 80, the balance between the loads applied to the nacelle 20 side and those applied to the tower 30 side, and the like. Further, the position may be set so as to make the length of the high-pressure oil line 50 as short as possible.

Accordingly, the generator 80 and the hydraulic motor 70 disposed on the rotary surface 36a are rotatable about the center axis B, relative to the support part 36b of the rotary table 36 disposed on the partition plate 35. As a result, the hydraulic motor 70 and the generator 80 are capable of following the nacelle 20 in accordance with yaw rotation of the nacelle 20 that changes with the wind direction, about the center axis B of yaw rotation, which makes it possible for the hydraulic pump 40 disposed inside the nacelle 20, and the hydraulic motor 70 and the generator 80 disposed inside the tower 30 to rotate integrally so as not to cause relative displacement in the direction of yaw rotation.

If only the hydraulic motor 70 is suspended directly below the hydraulic pump 40, a lower part of the hydraulic motor 70 may be supported. A flexible pipe 51a may be used as the high-pressure oil line 50. Accordingly, it is possible to absorb or permit a change in relative position of the hydraulic pump 40 and the hydraulic motor 70, which makes it possible to reduce an influence from swaying and oscillation.

As described above, in some embodiments, at least the hydraulic pump 40 having a large weight is disposed on the center axis B of yaw rotation inside the nacelle 20. Thus, it is unnecessary to position the hydraulic pump 40 behind the center axis B of the yaw rotation bearing 22 in the axial direction of the main shaft 2, which makes it possible to suppress or reduce an increase in the size of the nacelle 20 in the axial direction of the main shaft 2, and/or the weight of the nacelle 20.

Further, in some embodiments, the hydraulic pump 40 is disposed from front to rear across the center axis B of the yaw rotation bearing 22 in the direction of the rotational axis of the main shaft 2 inside the nacelle 20. Further, the hydraulic motor 70 is disposed in an upper space inside the tower 30 and below the hydraulic pump 40 so that at least a part of the hydraulic motor 70 overlaps with the hydraulic pump 40 in a top view. In other words, the hydraulic pump 40 is disposed on the center axis B of the yaw rotation bearing 22, and the hydraulic motor 70 is disposed in the upper space inside the tower 30 and below the hydraulic pump. Accordingly, at least the hydraulic motor 70 is not disposed behind the main shaft 2 or the hydraulic pump 40 inside the nacelle 20, which makes it possible to reduce the weight inside the nacelle space. Further, it is possible to position the hydraulic motor 70 directly below the hydraulic pump 40, in case of which it is possible to minimize the length of the hydraulic line, thus reducing costs related to piping, maintenance, and the like considerably.

Further, since the hydraulic pump 40 and the hydraulic motor 70 do not undergo relative displacement in the direction of yaw rotation, the hydraulic line does not twist due to yaw rotation during operation, at least between the hydraulic pump 40 and the hydraulic motor 70.

Further, since the hydraulic motor 70 is positioned directly below the hydraulic pump 40, it is possible to minimize the length of the hydraulic line extremely, thus reducing costs related to piping, maintenance, and the like considerably.

Further, the hydraulic pump 40, the hydraulic motor 70, and the high-pressure oil line 50 for feeding high-pressure oil therebetween are all supported on the nacelle 20 side via the nacelle base plate 21. Thus, the high-pressure side members of the hydraulic system 7 rotate integrally upon yaw rotation, which reduces the risk of oil leakage and the like due to twist and torsion.

Further, at least a part of the high-pressure oil line 50 merged at the rear end portion (41b) of the hydraulic pump 40 in the direction of the rotational axis is guided into the cylinder block 43 at a further downstream position. That is, it is possible to guide high-pressure oil collected behind the hydraulic pump 40 to the front side in the direction of the rotational axis, which makes it no longer necessary to provide members constituting the high-pressure oil line 50 behind the hydraulic pump 40. Thus, it is possible to reduce the size of the nacelle 20 in the direction of the rotational axis, and to further reduce the weight inside the space of the nacelle 20.

Further, the high-pressure oil line 50 directly connects to a lower portion of the cylinder block 43, which makes it possible to further reduce the length of the high-pressure oil line 50 disposed between the hydraulic pump 40 and the hydraulic motor 70 disposed below the hydraulic pump 40 and in the upper space 31 inside the tower 30 so as to overlap with the hydraulic pump 40 in a top view.

Further, the hydraulic pump 40 and the hydraulic motor 70 may be supported on a bearing upper portion 22a of the yaw rotation bearing 22. Accordingly, the flexibility of position and layout improves even further.

Further, the hydraulic motor 70 is disposed below the hydraulic pump 40 so that the output shaft 71 is vertical, and thus can be positioned so that the center axis B of yaw rotation and the output shaft 71 of the hydraulic motor 70 are substantially parallel in the upper space 31 inside the tower 30.

Further, the oil storage plate 93 and the tank 94 disposed below the hydraulic motor 70 can store and recover oil leaking from the hydraulic motor 70 disposed in the upper space inside the tower 30.

Further, it is possible to prevent oil leakage from the hydraulic system 7 with the seal 92, to store oil that the seal 92 fails to block in the oil storage 93, and to recover the stored oil with the tank 94.

With the anti-pulsation accumulators 90, 91, it is possible to prevent pulsation caused by pumping of the hydraulic pump 40.

Since power is transmitted between the hydraulic motor 70 and the generator 80 via the flexible coupling 72, it is possible to permit misalignment in the relative position therebetween. Thus, it is possible to reduce an influence from swaying and oscillation and to improve apparatus reliability.

## Claims

1. A renewable-energy type power generating apparatus (1) for generating electric power from renewable energy, comprising:
a tower (30);
a nacelle (20) disposed on an upper end portion of the tower (30) yaw-rotatably via a yaw rotation bearing (22);
a main shaft (2) housed in the nacelle (20) and configured to rotate with a rotor (10);
a hydraulic pump (40) housed in the nacelle (20);
a hydraulic motor (70) to be driven by working oil supplied from the hydraulic pump (40); and
a hydraulic system (7) for circulating the working oil between the hydraulic pump (40) and the hydraulic motor (70),
wherein the hydraulic motor (70) is disposed below the hydraulic pump (40) and in an upper space (31) inside the tower (30),
wherein the hydraulic pump (40) is disposed to extend from front to rear across a center axis (B) of the yaw rotation bearing (22) in a direction of a rotational axis (A) of the main shaft (2),
the hydraulic motor (70) is disposed so that at least a part of the hydraulic motor (70) overlaps with the hydraulic pump (40) in a top view, and
the hydraulic pump (40) and the hydraulic motor (70) are both supported to a nacelle side so that a relative displacement in a yaw-rotational direction does not occur between the hydraulic pump (40) and the hydraulic motor (70).

2. The renewable-energy power generating apparatus (1) according to claim 1 or 2,
wherein the nacelle (20) includes a nacelle base plate (21) disposed on a lower part of the nacelle (20) and configured to support the hydraulic pump (40), and
wherein the hydraulic motor (70) is disposed directly below the nacelle base plate (21).

3. The renewable-energy power generating apparatus (1) according to claim 1 or 2,
wherein the hydraulic pump (40) and the hydraulic motor (70) are supported on the nacelle base plate (21), and the hydraulic pump (40), the hydraulic motor (70), and a high-pressure oil line (50) of the hydraulic system (7) are configured to yaw-rotate with the nacelle base plate (21).

4. The renewable-energy power generating apparatus (1) according to claim 3,
wherein the hydraulic pump (40) includes a cylinder block (43) including a plurality of cylinders (44) for respectively guiding a plurality of pistons (45) slidably along a radial direction of the main shaft (2), and
wherein the high-pressure oil line (50) merges at the rear end portion of the hydraulic pump (40) with respect to the direction of the rotational axis (A), and at least a part of the high-pressure oil line (50) on a downstream side is guided into the cylinder block (43).

5. The renewable-energy power generating apparatus (1) according to claim 4,
wherein the high-pressure oil line (50) directly connects to a lower portion of the cylinder block (43).

6. The renewable-energy power generating apparatus (1) according any one of claims 1 to 5,
wherein the nacelle side comprises a bearing upper portion (22a) of the yaw rotation bearing (22), the bearing upper portion (22a) being connected to the nacelle (20), and a member supported to the bearing upper portion (22a).

7. The renewable-energy power generating apparatus (1) according to any one of claims 1 to 6,
wherein the hydraulic motor (70) is disposed so that an output shaft (71) of the hydraulic motor (70) is disposed along a vertical direction.

8. The renewable-energy power generating apparatus (1) according to any one of claims 1 to 7, further comprising an oil storage plate (93) and a tank (94) communicating with the oil storage plate (93) disposed inside the tower (30) and below the hydraulic motor (70).

9. The renewable-energy power generating apparatus (1) according to any one of claims 1 to 8, further comprising a seal (92) for preventing oil leakage from the hydraulic system (7) to outside, an oil storage (93) of oil which leaks from the seal (92), and a tank (94) communicating with the oil storage (93),
wherein the tower (30) accommodates the seal (92), the oil storage (93), and the tank (94).

10. The renewable-energy power generating apparatus (1) according to any one of claims 1 to 9, wherein the hydraulic system (7) comprises an anti-pulsation accumulator (90,91) for preventing pulsation of the hydraulic pump (40) and/or the hydraulic motor (70).

11. The renewable-energy power generating apparatus (1) according to any one of claims 1 to 10, comprising a wind turbine power generating apparatus and configured such that the main shaft (2) rotates as the rotor (10) receives wind.

12. The renewable-energy power generating apparatus (1) according to any one of claims 1 to 11, wherein the hydraulic motor (70) is coupled to a generator (80) via a flexible coupling (72) so as to be capable of transmitting power to the generator (80).

## Patentansprüche

1. Eine Vorrichtung zur Stromerzeugung aus erneuerbarer Energie (1) zum Erzeugen von elektrischer Energie aus erneuerbarer Energie, mit:
einem Turm (30),
einer Gondel (20), die an einem oberen Endabschnitt des Turms (30) über ein Gier-Rotationslager (22) für eine Gierbewegung drehbar angeordnet ist.
einer Hauptwelle (2), die in der Gondel (20) aufgenommen und konfiguriert ist, um sich mit einem Rotor (10) zu drehen,
einer hydraulischen Pumpe (40), die in der Gondel (20) aufgenommen ist,
einem hydraulischen Motor (70), der durch von der hydraulischen Pumpe (40) zugeführtes Arbeitsöl anzutreiben ist, und
einem hydraulischen System (7) zum Zirkulieren des Arbeitsöls zwischen der hydraulischen Pumpe (40) und dem hydraulischen Motor (70),
wobei der hydraulische Motor (70) unter der hydraulischen Pumpe (40) und in einem oberen Raum (31) im Inneren des Turms (30) angeordnet ist, wobei
die hydraulische Pumpe (40) angeordnet ist, um sich von vorne nach hinten über eine Mittelachse (B) des Gier-Rotationslagers (22) in einer Richtung einer Rotationsachse (A) der Hauptwelle (2) zu erstrecken,
der hydraulische Motor (70) so angeordnet ist, dass zumindest ein Teil des hydraulischen Motors (70) sich mit der hydraulischen Pumpe (40) in einer Draufsicht überlappt, und
die hydraulische Pumpe (40) und der hydraulische Motor (70) beide an einer Gondelseite so getragen sind, dass ein relativer Versatz in einer Gier-Rotationsrichtung zwischen der hydraulischen Pumpe (40) und dem hydraulischen Motor (70) nicht auftritt.

2. Die Vorrichtung zur Stromerzeugung aus erneuerbarer Energie (1) gemäß Anspruch 1 oder 2,
wobei die Gondel (20) eine Gondel-Basisplatte (21) aufweist, die an einem unteren Teil der Gondel (20) angeordnet und ausgestaltet ist, um die hydraulische Pumpe (40) zu tragen, und
wobei der hydraulische Motor (70) direkt unter der Gondel-Basisplatte (21) angeordnet ist.

3. Die Vorrichtung zur Stromerzeugung aus erneuerbarer Energie (1) gemäß Anspruch 1 oder 2,
wobei die hydraulische Pumpe (40) und der hydraulische Motor (70) an der Gondel-Basisplatte (21) getragen sind, und die hydraulische Pumpe (40), der hydraulische Motor (70) und eine Hochdruck-Ölleitung (50) des hydraulischen Systems (7) ausgestaltet sind, um in einer Gierbewegung mit der Gondel-Basisplatte (21) zu rotieren.

4. Die Vorrichtung zur Stromerzeugung aus erneuerbarer Energie (1) gemäß Anspruch 3,
wobei die hydraulische Pumpe (40) einen Zylinderblock (43) aufweist, der eine Vielzahl von Zylindern (44) zum jeweiligen Führen einer Vielzahl von Kolben (45) gleitend entlang einer Radialrichtung der Hauptwelle (2) enthält, und
wobei die Hochdruck-Ölleitung (50) an dem hinteren Endabschnitt der hydraulischen Pumpe (40) bezüglich der Richtung der Rotationsachse (A) zusammenläuft und zumindest ein Teil der Hochdruck-Ölleitung (50) an einer stromabwärtigen Seite in den Zylinderblock (43) geführt ist.

5. Die Vorrichtung zur Stromerzeugung aus erneuerbarer Energie (1) gemäß Anspruch 4,
wobei die Hochdruck-Ölleitung (50) direkt mit einem unteren Abschnitt des Zylinderblocks (43) verbunden ist.

6. Die Vorrichtung zur Stromerzeugung aus erneuerbarer Energie (1) gemäß einem der Ansprüche 1 bis 5,
wobei die Gondelseite einen oberen Lagerabschnitt (22a) der Gier-Rotationslagerung (22), wobei der obere Lagerabschnitt (22a) mit der Gondel (20) verbunden ist, und ein Element, das an dem oberen Lagerabschnitt (22a) getragen ist, aufweist.

7. Die Vorrichtung zur Stromerzeugung aus erneuerbarer Energie (1) gemäß einem der Ansprüche 1 bis 6,
wobei der hydraulische Motor so angeordnet ist, dass eine Ausgangswelle (71) des hydraulischen Motors (70) entlang einer Vertikalrichtung angeordnet ist.

8. Die Vorrichtung zur Stromerzeugung aus erneuerbarer Energie (1) gemäß einem der Ansprüche 1 bis 7, ferner mit einer Ölspeicherplatte (93) und einem Tank (94), der mit der Ölspeicherplatte (93) kommuniziert, die im Inneren des Turms (30) und unter dem hydraulischen Motor (70) angeordnet sind.

9. Die Vorrichtung zur Stromerzeugung aus erneuerbarer Energie (1) gemäß einem der Ansprüche 1 bis 8, ferner mit einer Dichtung (92) zum Verhindern einer Ölleckage von dem hydraulischen System (7) zur Außenseite, einem Ölspeicher (93) für Öl, dass aus der Dichtung (92) austritt, und einem Tank (94), der mit dem Ölspeicher (93) kommuniziert,
wobei der Turm (30) die Dichtung (92), den Ölspeicher (93) und den Tank (94) aufnimmt.

10. Die Vorrichtung zur Stromerzeugung aus erneuerbarer Energie (1) gemäß einem der Ansprüche 1 bis 9, wobei das hydraulische System (7) einen Anti-Pulsationsakkumulator (90,91) zum Verhindern einer Pulsation der hydraulischen Pumpe und/oder des hydraulischen Motors (70) aufweist.

11. Die Vorrichtung zur Stromerzeugung aus erneuerbarer Energie (1) gemäß einem der Ansprüche 1 bis 10, die eine Windturbinen-Energieerzeugungsvorrichtung aufweist und so ausgestaltet ist, dass die Hauptwelle (2) rotiert, wenn der Rotor (10) Wind empfängt.

12. Die Vorrichtung zur Stromerzeugung aus erneuerbarer Energie (1) gemäß einem der Ansprüche 1 bis 11, wobei der hydraulische Motor (70) mit einem Generator (80) über eine flexible Kupplung (72) so gekoppelt ist, dass er Energie zu dem Generator (80) übertragen kann.

## Revendications

1. Installation (1) de production de courant électrique de type à énergie renouvelable pour produire du courant électrique à partir d'énergie renouvelable, comprenant :
une tour (30);
une nacelle (20) disposée sur une partie d'extrémité supérieure de la tour (30) à rotation de lacet par l'intermédiaire d'un palier (22) à rotation de lacet;
un arbre (2) principal logé dans la nacelle (20) et configuré pour tourner avec une roue (10);
une pompe (40) hydraulique logée dans la nacelle (20);
un moteur (70) hydraulique à entraîner par de l'huile de travail fournie par la pompe (40) hydraulique; et
un système (7) hydraulique pour faire circuler l'huile de travail entre la pompe (40) hydraulique et le moteur (70) hydraulique,
le moteur (70) hydraulique étant disposé en dessous de la pompe (40) hydraulique et dans un espace (31) supérieure à l'intérieur de la tour (30),
dans laquelle
la pompe (40) hydraulique est disposée de manière à s'étendre de l'avant à l'arrière en traversant un axe (2) central du palier (22) à rotation de lacet dans une direction d'un axe (A) de rotation de l'arbre (2) principal,
le moteur (70) hydraulique est disposé de manière à ce qu'au moins une partie du moteur (70) hydraulique chevauche la pompe (40) hydraulique en vue en plan, et
la pompe (40) hydraulique et le moteur (70) hydraulique sont supportés tous deux d'un côté de la nacelle, de manière à ce qu'un déplacement relatif dans la direction de rotation de lacet ne se produise pas entre la pompe (40) hydraulique et le moteur (70) hydraulique.

2. Installation de production de courant électrique à énergie renouvelable suivant la revendication 1 ou 2,
dans laquelle la nacelle (20) comprend une plaque (21) de base disposée sur une partie inférieure de la nacelle (20) et configurée pour supporter la pompe (40) hydraulique, et
dans laquelle le moteur (70) hydraulique est disposé directement en dessous de la plaque (21) de base de la nacelle.

3. Installation de production de courant électrique à énergie renouvelable suivant la revendication 1 ou 2,
dans laquelle la pompe (40) hydraulique et le moteur (70) hydraulique sont supportés sur la plaque (21) de base de la nacelle, et la pompe (40) hydraulique, le moteur (70) hydraulique, et une ligne (50) d'huile haute pression du système (7) hydraulique sont configurés pour une rotation de lacet avec la plaque (2) de base de la nacelle.

4. Installation de production de courant électrique à énergie renouvelable suivant la revendication 3,
dans laquelle la pompe (40) hydraulique comprend un bloc cylindre (43) comprenant une pluralité de cylindres (44) pour guider respectivement une pluralité de pistons (45) à coulissement dans une direction radiale de l'arbre (2) principal, et
dans laquelle la ligne (50) d'huile haute pression se confond à la partie d'extrémité arrière de la pompe (40) hydraulique avec la direction de l'axe (A) de rotation, et au moins une partie de la ligne (50) d'huile haute pression du côté en aval est guidée dans le bloc-cylindre (43).

5. Installation de production de courant électrique à énergie renouvelable suivant la revendication 4,
dans laquelle la ligne (50) d'huile haute pression est reliée directement à une partie inférieure du bloc-cylindre (43) .

6. Installation de production de courant électrique à énergie renouvelable suivant l'une quelconque des revendications 1 à 5,
dans laquelle le côté de la nacelle comprend une partie (22a) supérieure du palier (22) à rotation de lacet, la partie (22a) supérieure du palier étant reliée à la nacelle (20), et un élément supporté sur la partie (22a) supérieure du palier.

7. Installation de production de courant électrique à énergie renouvelable suivant l'une quelconque des revendications 1 à 6,
dans laquelle le moteur (70) hydraulique est disposé de manière à ce qu'un arbre (71) de sortie du moteur (70) hydraulique soit disposé suivant une direction verticale.

8. Installation de production de courant électrique à énergie renouvelable suivant l'une quelconque des revendications 1 à 7, comprenant en outre une plaque (93) de stockage d'huile et une cuve (94) communiquant avec la plaque (93) de stockage d'huile disposée à l'intérieur de la tour (30) et en dessous du moteur (70) hydraulique.

9. Installation de production de courant électrique à énergie renouvelable suivant l'une quelconque des revendications 1 à 8, comprenant en outre un joint (92) pour empêcher une fuite d'huile du système (7) hydraulique à l'extérieur, un stockage (93) de l'huile qui fuit du joint (92) et une cuve (94) communiquant avec le stockage (93) d'huile,
dans laquelle la tour (30) loge le joint (92), le stockage (93) d'huile et la cuve (94).

10. Installation de production de courant électrique à énergie renouvelable suivant l'une quelconque des revendications 1 à 9, dans laquelle le système (7) hydraulique comprend un accumulateur (90, 91) d'anti-pulsation pour empêcher une pulsation de la pompe (40) hydraulique et/ou du moteur (70) hydraulique.

11. Installation de production de courant électrique à énergie renouvelable suivant l'une quelconque des revendications 1 à 10, comprenant une installation de production de courant électrique à éolienne et configuré de manière à ce que l'arbre (2) principal tourne alors que la roue (10) reçoit du vent.

12. Installation de production de courant électrique à énergie renouvelable suivant l'une quelconque des revendications 1 à 11, dans laquelle le moteur (70) hydraulique est accouplé à une génératrice (80) par l'intermédiaire d'un accouplement (72) souple, de manière à pouvoir transmettre de la puissance à la génératrice (80).
